# EUROPEAN PATENT APPLICATION

(11) **EP 4 553 491 A1**
(43) Date of publication of application: **14.05.2025**
(21) Application number: 23835113.4
(22) Date of filing: 31.03.2023
(51) Int. Cl.: G01N 23/04, G01N 23/18

(54) **INFORMATION PROCESSING DEVICE, INFORMATION PROCESSING METHOD, AND INFORMATION PROCESSING PROGRAM**

(30) Priority: 07.07.2022 JP 2022110030
(71) Applicant: FUJIFILM Corporation, Tokyo 106-8620 (JP)
(72) Inventor: IKEDA, Haruka, Tokyo 106-8620 (JP)
(74) Representative: Meissner Bolte Partnerschaft mbB
(86) International application number: PCT/JP2023/013733
(87) International publication number: WO 2024/009572

(57) **Abstract**

An information processing apparatus determines, based on an image capturing condition including an image capturing direction of a radiographic image captured by irradiating an inspection target object with radiation and structure information representing a three-dimensional structure of the inspection target object, whether to re-capture the radiographic image.

## Description

### BACKGROUND OF THE INVENTION

### 1. Field of the Invention

The present disclosure relates to an information processing apparatus, an information processing method, and an information processing program.

### 2. Description of the Related Art

JP2012-108078A discloses a radiographic image capturing apparatus that captures a radiographic image by irradiating an irradiation target surface of a housing of a radiation detector with radiation and performs a line defect detection process on the radiographic image. The radiographic image capturing apparatus re-captures the radiographic image when line defects detected by the line defect detection process include a line defect set as a re-detection target.

### SUMMARY OF THE INVENTION

In non-destructive inspection, a two-dimensional radiographic image captured by irradiating an inspection target object with radiation may fail to show a flaw present in the inspection target object depending on the thickness or the like of the inspection target object. In this case, a user checks the radiographic image and determines whether to re-capture the radiographic image. If the user determines to re-capture the radiographic image, the installation of the inspection target object, the setting of radiation irradiation conditions, and the like are to be performed again, resulting in a decrease in the inspection efficiency of the non-destructive inspection.

The present disclosure has been made in view of the above circumstances, and an object thereof is to provide an information processing apparatus, an information processing method, and an information processing program that can suppress a decrease in the inspection efficiency of non-destructive inspection.

An information processing apparatus according to a first aspect is an information processing apparatus including at least one processor, the at least one processor being configured to determine, based on an image capturing condition including an image capturing direction of a radiographic image captured by irradiating an inspection target object with radiation and structure information representing a three-dimensional structure of the inspection target object, whether to re-capture the radiographic image.

An information processing apparatus according to a second aspect is the information processing apparatus according to the first aspect, in which the at least one processor is configured to determine to re-capture the radiographic image in a case where, when the image capturing direction of the radiographic image that has been captured is set as a viewpoint direction, it is determined, based on the structure information, that a region where a flaw present in the inspection target object does not appear in the radiographic image is present in the inspection target object.

An information processing apparatus according to a third aspect is the information processing apparatus according to the first aspect or the second aspect, in which the at least one processor is configured to determine to re-capture the radiographic image in a case where a flaw is detected from the radiographic image that has been captured and it is determined, based on the structure information, that the inspection target object has a thickness equal to or greater than a certain thickness along a straight line connecting the flaw and a radiation source.

An information processing apparatus according to a fourth aspect is the information processing apparatus according to any one of the first to third aspects, in which the at least one processor is configured to, in a case where it is determined to re-capture the radiographic image, derive the image capturing condition for re-capturing, based on the image capturing condition of the radiographic image that has been captured.

An information processing apparatus according to a fifth aspect is the information processing apparatus according to the fourth aspect, in which the at least one processor is configured to, in a case where it is determined to re-capture the radiographic image, derive the image capturing condition for re-capturing, based on the structure information and the image capturing condition of the radiographic image that has been captured.

An information processing method according to a sixth aspect is an information processing method in which a processor included in an information processing apparatus executes processing including determining, based on an image capturing condition including an image capturing direction of a radiographic image captured by irradiating an inspection target object with radiation and structure information representing a three-dimensional structure of the inspection target object, whether to re-capture the radiographic image.

An information processing program according to a seventh aspect is an information processing program for causing a processor included in an information processing apparatus to execute processing including determining, based on an image capturing condition including an image capturing direction of a radiographic image captured by irradiating an inspection target object with radiation and structure information representing a three-dimensional structure of the inspection target object, whether to re-capture the radiographic image.

According to the present disclosure, it is possible to suppress a decrease in the inspection efficiency of non-destructive inspection.

### BRIEF DESCRIPTION OF THE DRAWINGS

Fig. 1 is a block diagram illustrating a schematic configuration of a radiographic image capturing apparatus;
Fig. 2 is a block diagram illustrating an example of a hardware configuration of an information processing apparatus;
Fig. 3 is a diagram depicting structure information;
Fig. 4 is a diagram depicting a trained model;
Fig. 5 is a block diagram illustrating an example of a functional configuration of the information processing apparatus;
Fig. 6 is a diagram depicting a process of deriving an image capturing direction;
Fig. 7 is a diagram depicting a process of deriving a position of a flaw in the structure information;
Fig. 8 is a diagram depicting a relationship between a depth of a flaw and a degree of blur of a region of the flaw in an inspection image;
Fig. 9 is a diagram depicting a process of deriving a position of a flaw on the basis of a plurality of inspection images;
Fig. 10 is a diagram depicting an example of a determination process of re-capturing of an inspection image;
Fig. 11 is a diagram depicting an example of the determination process of re-capturing of an inspection image;
Fig. 12 is a diagram depicting an example of the determination process of re-capturing of an inspection image;
Fig. 13 is a diagram illustrating an example of a display screen;
Fig. 14 is a flowchart illustrating an example of an image capturing control process;
Fig. 15 is a diagram illustrating an example of an image capturing direction according to a modification; and
Fig. 16 is a diagram depicting a determination process of re-capturing of an inspection image according to a modification.

### DESCRIPTION OF THE PREFERRED EMBODIMENTS

Hereinafter, exemplary embodiments for implementing the technology of the present disclosure will be described in detail with reference to the drawings.

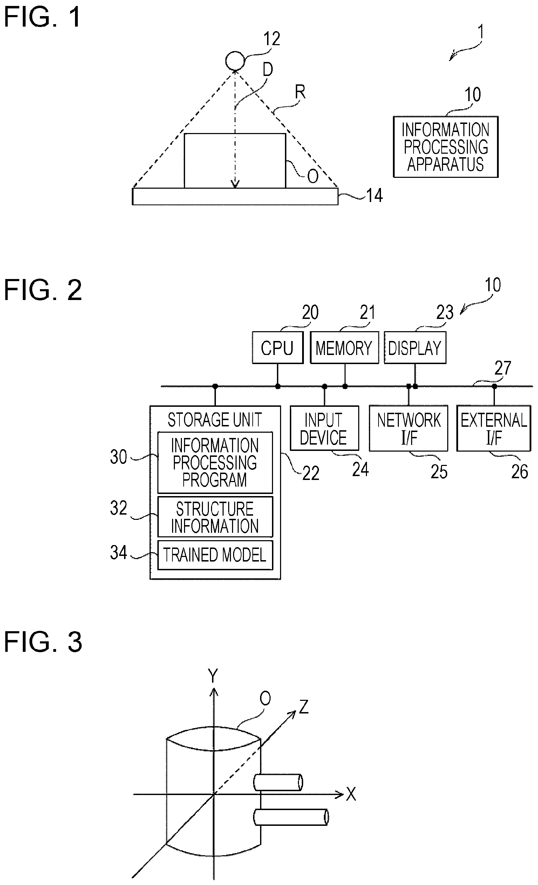

First, a configuration of a radiographic image capturing apparatus 1 according to the present embodiment will be described with reference to Fig. 1. The radiographic image capturing apparatus 1 is used for the non-destructive inspection of an inspection target object. As illustrated in Fig. 1, the radiographic image capturing apparatus 1 includes an information processing apparatus 10, a radiation source 12, and a radiation detector 14. The information processing apparatus 10, the radiation source 12, and the radiation detector 14 are communicably connected to each other. The information processing apparatus 10 is, for example, a computer such as a personal computer or a server computer.

The radiation source 12 irradiates an inspection target object O with radiation R such as X-rays. The radiation source 12 according to the present embodiment emits the radiation R in a cone-beam shape. A direction from the radiation source 12 to one point on the radiation detector 14 at which the radiation R transmitted through the inspection target object O arrives is referred to as an "image capturing direction D". In the present embodiment, a case where a direction from the radiation source 12 to one point on the radiation detector 14 at which the radiation R transmitted through the center of the inspection target object O arrives is set as the image capturing direction D will be described as an example.

The radiation detector 14 includes a scintillator as an example of a light emitting layer that emits light when irradiated with the radiation R, and a thin film transistor (TFT) substrate. The scintillator and the TFT substrate are laminated together. The TFT substrate includes a plurality of pixels arranged in a two-dimensional manner, and each pixel includes a field-effect thin film transistor and a sensor unit as an example of a conversion element in which generated charge increases as the amount of radiation to be emitted increases. The sensor unit absorbs light emitted by the scintillator to generate charge, and accumulates the generated charge. The field-effect thin film transistor converts the charge accumulated in the sensor unit into an electrical signal and outputs the electrical signal. With the above configuration, the radiation detector 14 generates a two-dimensional radiographic image corresponding to the radiation R emitted from the radiation source 12 to the inspection target object O, and outputs the generated radiographic image to the information processing apparatus 10.

In this manner, in the radiographic image capturing apparatus 1, a radiographic image captured by irradiating the inspection target object O with the radiation R from the radiation source 12 along the image capturing direction D is stored in the information processing apparatus 10. A radiographic image captured by irradiating the inspection target object O with the radiation R along the image capturing direction D is hereinafter referred to as an "inspection image".

Next, a hardware configuration of the information processing apparatus 10 according to the present embodiment will be described with reference to Fig. 2. As illustrated in Fig. 2, the information processing apparatus 10 includes a central processing unit (CPU) 20, a memory 21 serving as a temporary storage area, and a non-volatile storage unit 22. The information processing apparatus 10 further includes a display 23 such as a liquid crystal display, an input device 24 such as a keyboard and a mouse, and a network interface (I/F) 25 to be connected to a network. The information processing apparatus 10 further includes an external I/F 26 to which the radiation source 12 and the radiation detector 14 are to be connected. The CPU 20, the memory 21, the storage unit 22, the display 23, the input device 24, the network I/F 25, and the external I/F 26 are connected to a bus 27. The CPU 20 is an example of a processor according to the technology disclosed herein.

The storage unit 22 is implemented by a hard disk drive (HDD), a solid state drive (SSD), a flash memory, or the like. The storage unit 22 serving as a storage medium stores an information processing program 30. The CPU 20 reads the information processing program 30 from the storage unit 22, loads the information processing program 30 into the memory 21, and executes the loaded information processing program 30.

The storage unit 22 further stores an inspection image, structure information 32, and a trained model 34. The structure information 32 includes information representing a three-dimensional structure of the inspection target object O. As illustrated in Fig. 3, the structure information 32 according to the present embodiment is information used when a virtual inspection target object O is displayed on the display 23, and is information representing the three-dimensional structure of the inspection target object O by coordinates in an orthogonal coordinate system constituted by three axes, namely, an X axis, a Y axis, and a Z axis. The structure information 32 also includes materials of the parts of the inspection target object O. The material of each part specifies the transmittance of the radiation R through the part. Examples of the structure information 32 include design information such as computer aided design (CAD) data.

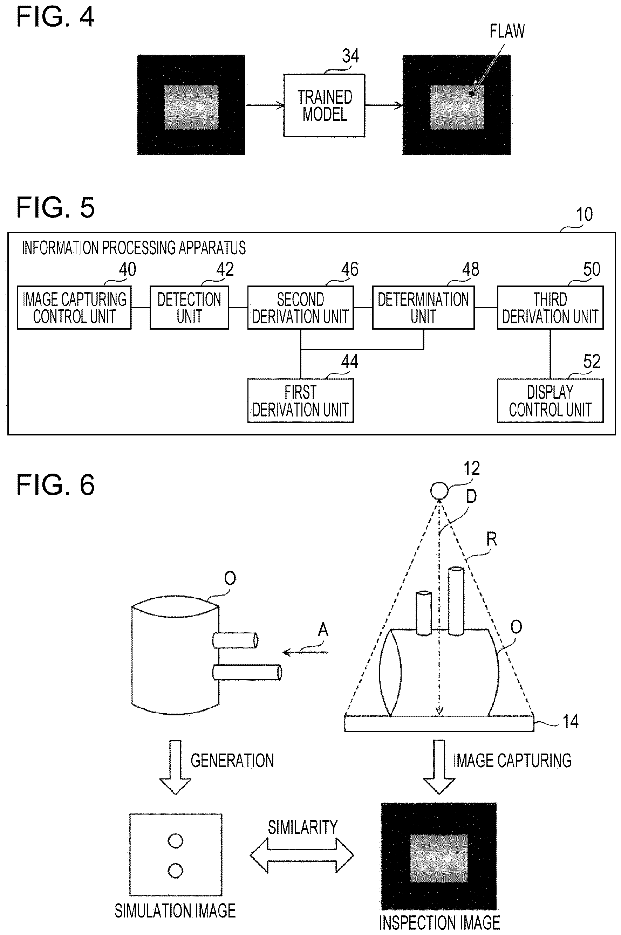

As illustrated in Fig. 4, the trained model 34 is a trained model that receives an inspection image as an input and outputs information on a flaw of the inspection target object O in the inspection image as the input, and is a trained model trained by using a plurality of sets of inspection images and information on a flaw of the inspection target object O in the inspection images as learning data (also referred to as labeled training data). Examples of the information on the flaw include the position of the flaw in the inspection image, the size of the flaw, and the shape of the flaw. In the present embodiment, the position of the flaw in the inspection image is represented by coordinates in an orthogonal coordinate system in which a specific point (e.g., a point at the upper left corner) of the two-dimensional inspection image is taken as the origin and that is constituted by two axes, namely, an X axis and a Y axis. In this specification, the "flaw" is defined as a term of non-destructive inspection and means a discontinuity such as a bubble, a foreign substance, or a crack.

Next, a functional configuration of the information processing apparatus 10 according to the present embodiment will be described with reference to Fig. 5. As illustrated in Fig. 5, the information processing apparatus 10 includes an image capturing control unit 40, a detection unit 42, a first derivation unit 44, a second derivation unit 46, a determination unit 48, a third derivation unit 50, and a display control unit 52. The CPU 20 executes the information processing program 30 to function as the image capturing control unit 40, the detection unit 42, the first derivation unit 44, the second derivation unit 46, the determination unit 48, the third derivation unit 50, and the display control unit 52.

The image capturing control unit 40 performs control to capture an inspection image by irradiating the inspection target object O with the radiation R along the image capturing direction D. Specifically, the image capturing control unit 40 controls the radiation source 12 to emit the radiation R according to set irradiation conditions of the radiation R via the external I/F 26. The irradiation conditions of the radiation R include, for example, the tube voltage of the radiation source 12, the tube current of the radiation source 12, the irradiation period of the radiation R, and the like and are set by the user. The image capturing control unit 40 controls on and off of the field-effect thin film transistor of the radiation detector 14 in accordance with the irradiation timing of the radiation R via the external I/F 26. This control allows the radiation detector 14 to generate a two-dimensional inspection image corresponding to the radiation R emitted from the radiation source 12 to the inspection target object O and output the generated inspection image to the information processing apparatus 10.

The detection unit 42 detects, based on the trained model 34 and the inspection image captured under the control of the image capturing control unit 40, a flaw of the inspection target object O in the inspection image. Specifically, the detection unit 42 inputs the inspection image to the trained model 34. The trained model 34 outputs information on the flaw of the inspection target object O corresponding to the input inspection image. Accordingly, the detection unit 42 detects the flaw of the inspection target object O in the inspection image.

The detection unit 42 may detect the flaw of the inspection target object O in the inspection image by a known detection algorithm. The flaw of the inspection target object O in the inspection image may be designated by the user via the input device 24. In this case, the detection unit 42 detects the flaw designated by the user.

The first derivation unit 44 derives the image capturing direction D in the structure information 32. A specific example of a process of deriving the image capturing direction D in the structure information 32 by the first derivation unit 44 will be described with reference to Fig. 6.

As illustrated on the right side of Fig. 6, the two-dimensional inspection image is obtained by being captured by irradiating the inspection target object O with the radiation R along the image capturing direction D from the radiation source 12. As illustrated on the left side of Fig. 6, the first derivation unit 44 generates a two-dimensional simulation image by projecting the inspection target object O along a viewpoint direction for a virtual inspection target object O displayed on the display 23 on the basis of the structure information 32. The viewpoint direction is a direction in which when the virtual inspection target object O is viewed, the surface of the inspection target object O appears as the front surface of the display screen. The example on the left side of Fig. 6 presents an example in which a simulation image when the virtual inspection target object O based on the structure information 32 is viewed from the right side of Fig. 6, that is, in the direction of an arrow A, is generated. For example, the viewpoint direction is represented by coordinates of one point, and a direction passing through the origin from the coordinates is the viewpoint direction.

The first derivation unit 44 generates respective simulation images for a plurality of different viewpoint directions. Further, the first derivation unit 44 derives a level of similarity between each of the generated simulation images and the inspection image. Specifically, for example, the first derivation unit 44 derives a level of similarity between the silhouette of the inspection target object O in the simulation image and the silhouette of the inspection target object O in the inspection image. The first derivation unit 44 may extract a contour line of the inspection target object O in the simulation image and a contour line of the inspection target object O in the inspection image and derive a level of similarity between outer shapes of the inspection target object O configured by the extracted contour lines.

Then, the first derivation unit 44 sets the viewpoint direction for the simulation image having the highest level of similarity to the inspection image as the image capturing direction D in the structure information 32.

The second derivation unit 46 derives the three-dimensional coordinates of the flaw in the structure information 32 by converting the position of the flaw of the inspection target object O in the inspection image detected by the detection unit 42 into the position of the flaw in the structure information 32 by using the image capturing direction D derived by the first derivation unit 44. The second derivation unit 46 may acquire the image capturing direction D derived by an external device, instead of the first derivation unit 44, via the network I/F 25.

Specifically, first, the second derivation unit 46 converts the position of the flaw of the inspection target object O in the inspection image into the position in the structure information 32 in a plane for which the image capturing direction D is set as the viewpoint direction. For example, the second derivation unit 46 can perform the conversion described above by a process of matching the scale of the outer shape of the inspection target object O in the inspection image with the scale of the outer shape of the virtual inspection target object O viewed from the image capturing direction D in the structure information 32.

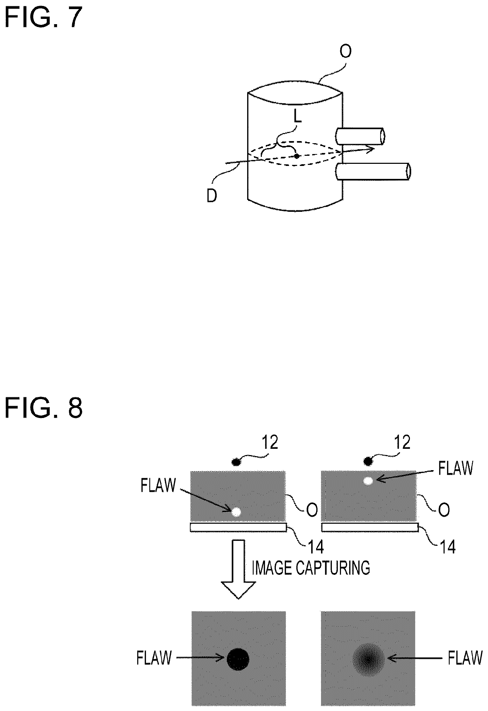

In this way, the position of the flaw of the inspection target object O in a plane in a case where the virtual inspection target object O is viewed from the image capturing direction D in the structure information 32 can be determined. Accordingly, as illustrated in Fig. 7, if a depth L of the flaw along the image capturing direction D can be determined, the three-dimensional coordinates of the flaw in the structure information 32 can be determined.

The second derivation unit 46 according to the present embodiment derives the depth of the flaw along the image capturing direction D on the basis of one inspection image. As illustrated in Fig. 8, as the depth of the flaw along the image capturing direction D decreases, that is, as the distance of the flaw from the radiation detector 14 increases, the degree of blur of the region of the flaw in the inspection image increases. This is because the farther the flaw is from the radiation detector 14, the more likely it is that the flaw is affected by scattered radiation or the like. Accordingly, the second derivation unit 46 derives the depth of the flaw along the image capturing direction D on the basis of the degree of blur of the region of the flaw in the inspection image. Specifically, the second derivation unit 46 derives the depth of the flaw along the image capturing direction D as a larger value for a larger degree of blur of the region of the flaw in the inspection image. Then, the second derivation unit 46 derives a position separated from the position corresponding to the surface of the inspection target object O in the structure information 32 by the derived depth along the image capturing direction D as the position of the flaw in the structure information 32.

The above processing allows the second derivation unit 46 to convert the position of the flaw of the inspection target object O in the two-dimensional inspection image into the three-dimensional coordinates in the structure information 32.

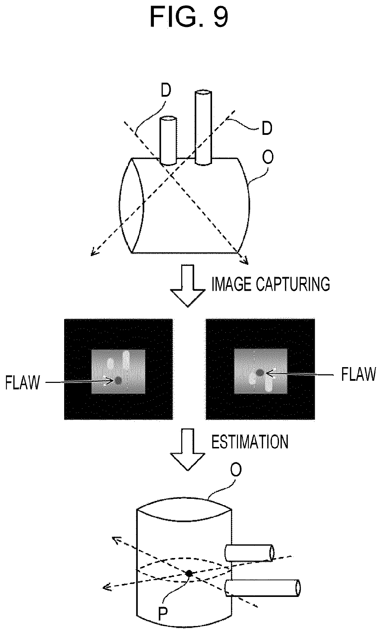

The second derivation unit 46 may convert the position of the flaw of the inspection target object O in the inspection image into the position of the flaw in the structure information 32 on the basis of a plurality of inspection images captured from a plurality of different image capturing directions D. In this case, the second derivation unit 46 converts the position of the flaw in each of the plurality of inspection images into a position in the structure information 32 in a plane for which each of the image capturing directions D is set as the viewpoint direction, by using the image capturing directions D derived by the first derivation unit 44. Then, as illustrated in Fig. 9, the second derivation unit 46 derives, as the position of the flaw in the structure information 32, an intersection point P of a plurality of straight lines each extending along one of the image capturing directions D and each passing through the position of the flaw after the conversion for one of the plurality of inspection images. Fig. 9 illustrates an example for two inspection images.

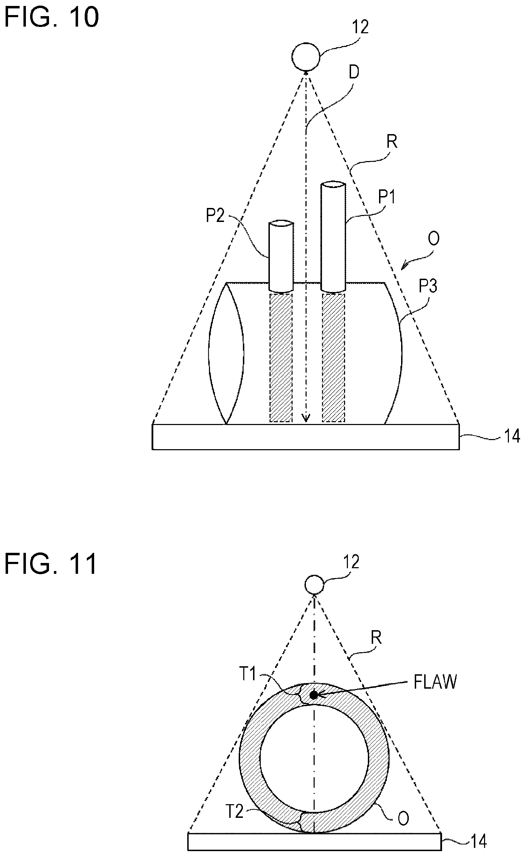

The determination unit 48 determines whether to re-capture the inspection image on the basis of the structure information 32 and image capturing conditions including the image capturing direction D derived by the first derivation unit 44. Specifically, the determination unit 48 determines to re-capture the inspection image in a case where, when the image capturing direction D of a captured inspection image is set as the viewpoint direction, it is determined, based on the structure information 32, that a region where a flaw present in the inspection target object O does not appear in the inspection image is present in the inspection target object O. An example of a case where this determination is performed will be described with reference to Fig. 10.

As illustrated in Fig. 10, it is assumed here that the inspection target object O is constituted by three parts P1, P2, and P3 and the image capturing direction D is a direction along the longitudinal direction of the part P1 and the part P2. In the example illustrated in Fig. 10, in a case where the thicknesses of the part P1 and the part P2 along the image capturing direction D are equal to or greater than a certain value and the transmittances of the radiation R through the part P1 and the part P2 are equal to or less than a certain value, the radiation R with which the part P1 and the part P2 are irradiated does not reach the part P3. That is, in this case, when the image capturing direction D is set as the viewpoint direction, even if a flaw is present in regions of the part P3 corresponding to shadows of the part P1 and the part P2, it is considered that the flaw does not appear in the inspection image. In the example of Fig. 10, the regions of the part P3 corresponding to the shadows of the part P1 and the part P2 when the image capturing direction D is set as the viewpoint direction are represented as rectangles filled with oblique lines. Accordingly, the determination unit 48 determines whether to re-capture the inspection image by determining, based on the structure information 32 and the image capturing direction D, whether a region where a flaw present in the inspection target object O does not appear in the inspection image is present in the inspection target object O.

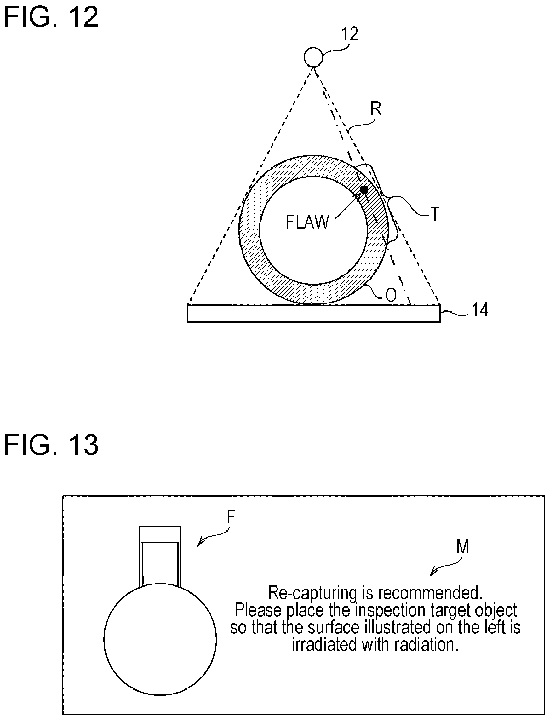

When a flaw is detected from a captured inspection image, the determination unit 48 determines whether to re-capture the inspection image on the basis of the structure information 32 and the position of the flaw derived by the second derivation unit 46. Specifically, in a case where a flaw is detected from a captured inspection image and it is determined, based on the structure information 32, that the inspection target object O has a thickness equal to or greater than a certain thickness along a straight line connecting the flaw and the radiation source 12, the determination unit 48 determines to re-capture the inspection image. An example of a case where this determination is performed will be described with reference to Figs. 11 and 12.

As illustrated in Figs. 11 and 12, a case where the inspection target object O has a cylindrical shape and the inspection target object O is irradiated with the radiation R from the side surface of the inspection target object O will be described as an example. In the example of Figs. 11 and 12, a straight line connecting the flaw and the radiation source 12 is indicated by a dash-dotted line. When the flaw is located at the position illustrated in Fig. 11, the thickness of the inspection target object O along the straight line connecting the flaw and the radiation source 12 is equal to the sum of T1 and T2. When the flaw is located at the position illustrated in Fig. 12, the thickness of the inspection target object O along the straight line connecting the flaw and the radiation source 12 is equal to T. In a case where the thickness of the inspection target object O along the straight line connecting the flaw and the radiation source 12 is equal to or greater than a certain thickness, there is a possibility that a plurality of flaws will appear in the inspection image in an overlapping manner. Accordingly, in response to a flaw being detected from a captured inspection image, the determination unit 48 determines, based on the structure information 32, whether the inspection target object O has a thickness equal to or greater than a certain thickness along a straight line connecting the flaw and the radiation source 12, thereby determining whether to re-capture the inspection image.

If the determination unit 48 determines to perform re-capturing, the third derivation unit 50 derives image capturing conditions for re-capturing on the basis of the structure information 32 and the image capturing conditions of the captured inspection image. For example, the third derivation unit 50 derives, based on the image capturing direction D of the captured inspection image and the structure information 32, the image capturing direction D in which the radiation R reaches a region in the inspection target object O that is determined not to be reached by the radiation R in the captured inspection image, as the image capturing direction D for re-capturing. In addition, for example, the third derivation unit 50 derives the image capturing direction D in which the radiation R reaches a region where it is determined that there is a possibility that flaws will appear in the captured inspection image in an overlapping manner, as the image capturing direction D for re-capturing, based on the image capturing direction D of the captured inspection image, the structure information 32, and the positions of the flaws. In this case, an example of the image capturing direction D for re-capturing is a direction orthogonal to a straight line connecting the flaws and the radiation source 12.

If the determination unit 48 determines to perform re-capturing, the third derivation unit 50 may derive image capturing conditions for re-capturing on the basis of the image capturing conditions of the captured inspection image without using the structure information 32. In this case, for example, the third derivation unit 50 derives a direction orthogonal to the image capturing direction D of the captured inspection image as the image capturing direction D for re-capturing.

The display control unit 52 performs control to display, on the display 23, information indicating that re-capturing is to be performed, based on the image capturing direction D derived by the third derivation unit 50. As an example, as illustrated in Fig. 13, the display control unit 52 performs control to display, on the display 23, a front view F of the inspection target object O in a case where the image capturing direction D is set as the viewpoint direction and a message M for recommending re-capturing and prompting installation of the inspection target object O in accordance with the front view F, based on the structure information 32.

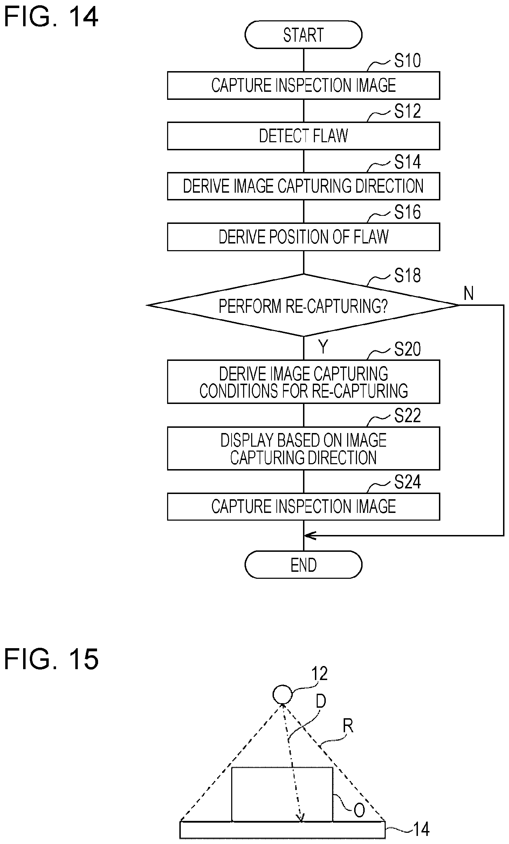

Next, the operation of the information processing apparatus 10 according to the present embodiment will be described with reference to Fig. 14. When the CPU 20 executes the information processing program 30, an image capturing control process illustrated in Fig. 14 is executed. The image capturing control process illustrated in Fig. 14 is executed when, for example, the user inputs an instruction to start execution of the image capturing control process.

In step S10 of Fig. 14, as described above, the image capturing control unit 40 performs control to capture an inspection image by irradiating the inspection target object O with the radiation R along the image capturing direction D. In step S12, as described above, the detection unit 42 detects, based on the inspection image captured in step S10 and the trained model 34, a flaw of the inspection target object O in the inspection image.

In step S14, as described above, the first derivation unit 44 derives the image capturing direction D in the structure information 32. In step S16, as described above, the second derivation unit 46 converts the position of the flaw of the inspection target object O in the inspection image detected in step S12 into the position of the flaw in the structure information 32 by using the image capturing direction D derived in step S14 to derive the three-dimensional coordinates of the flaw in the structure information 32.

In step S18, as described above, the determination unit 48 determines whether to re-capture the inspection image on the basis of the structure information 32 and image capturing conditions including the image capturing direction D derived in step S14. If this determination is affirmative, the process proceeds to step S20. In step S20, as described above, the third derivation unit 50 derives image capturing conditions for re-capturing on the basis of the structure information 32 and the image capturing conditions of the captured inspection image in the processing of step S10.

In step S22, as described above, the display control unit 52 performs control to display, on the display 23, information indicating that re-capturing is to be performed, based on the image capturing direction D derived in step S20. The user changes the position of the inspection target object O in accordance with the information displayed on the display 23, and inputs a re-capturing instruction. When a re-capturing instruction is input, in step S24, the image capturing control unit 40 performs control to capture an inspection image as in step S10.

When the processing of step S24 is finished, the image capturing control process ends. If the determination in step S18 is negative, the image capturing control process ends. After the execution of step S24, step S12 and subsequent steps may be executed again.

As described above, according to the present embodiment, the information processing apparatus 10 immediately determines whether to perform re-capturing after capturing an inspection image. Thus, it is possible to suppress a decrease in the inspection efficiency of non-destructive inspection.

In the embodiment described above, as illustrated in Fig. 15, when the second derivation unit 46 derives the three-dimensional coordinates of the flaw, the image capturing direction D may be set to a direction inclined with respect to the direction from the radiation source 12 to the center of the inspection target object O.

In the embodiment described above, the image capturing conditions may include the irradiation conditions of the radiation R in addition to the image capturing direction D.

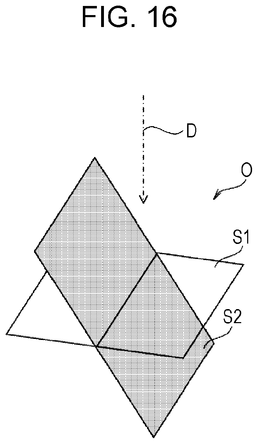

In the embodiment described above, the determination unit 48 may determine to perform re-capturing, based on the structure information 32 and the position of the flaw derived by the second derivation unit 46, when the inspection target object O has a plurality of intersecting surfaces and it is determined that a flaw is present in a portion where at least two surfaces of the plurality of surfaces overlap each other along the image capturing direction D. An example of a case where this determination is performed will be described with reference to Fig. 16. As illustrated in Fig. 16, it is assumed here that the inspection target object O has two surfaces S1 and S2 intersecting each other and the two surfaces S1 and S2 partially overlap each other along the image capturing direction D. In this case, if a flaw is present in a portion where the surfaces S1 and S2 overlap each other, it is difficult to determine whether the flaw appearing in the inspection image is a flaw on the surface S1 or a flaw on the surface S2. Accordingly, the determination unit 48 may determine to perform re-capturing in such a case.

In the embodiment described above, furthermore, the hardware structures of processing units that execute various processes, such as the functional units of the information processing apparatus 10, may be implemented using various processors described below. As described above, the various processors described above include a CPU that is a general-purpose processor configured to execute software (program) to function as various processing units, and further include a programmable logic device (PLD) that is a processor whose circuit configuration can be changed after manufacturing, such as a field programmable gate array (FPGA), a dedicated electric circuit that is a processor having a circuit configuration designed exclusively for executing specific processing, such as an application specific integrated circuit (ASIC), and so on.

One processing unit may be constituted by one of these various processors, or may be constituted by a combination of two or more processors of the same type or different types (e.g., a combination of a plurality of FPGAs or a combination of a CPU and an FPGA). Alternatively, a plurality of processing units may be configured by one processor.

Examples of configuring a plurality of processing units by one processor include, first, a form in which, as typified by a computer such as a client and a server, one processor is configured by a combination of one or more CPUs and software and the processor functions as a plurality of processing units. The examples include, second, a form in which, as typified by a system on chip (SoC) or the like, a processor is used that implements the functions of the entire system including a plurality of processing units by one integrated circuit (IC) chip. As described above, the various processing units are configured by using one or more of the various processors described above as a hardware structure.

More specifically, the hardware structure of these various processors may be an electric circuit (circuitry) in which circuit elements such as semiconductor elements are combined.

The embodiment described above has described an embodiment in which the information processing program 30 is stored (installed) in the storage unit 22 in advance, but is not limited to this embodiment. The information processing program 30 may be provided in a form recorded in recording media such as a compact disc read only memory (CD-ROM), a digital versatile disc read only memory (DVD-ROM), and a universal serial bus (USB) memory. Alternatively, in an embodiment, the information processing program 30 may be downloaded from an external device via a network.

The disclosure of JP2022-110030 filed on July 7, 2022 is incorporated herein by reference in its entirety. All publications, patent applications, and technical standards mentioned herein are incorporated herein by reference to the same extent as if each individual publication, patent application, or technical standard was specifically and individually indicated to be incorporated by reference.

## Claims

1. An information processing apparatus comprising at least one processor,
the at least one processor being configured to
determine, based on an image capturing condition including an image capturing direction of a radiographic image captured by irradiating an inspection target object with radiation and structure information representing a three-dimensional structure of the inspection target object, whether to re-capture the radiographic image.

2. The information processing apparatus according to claim 1, wherein
the at least one processor is configured to
determine to re-capture the radiographic image in a case where, when the image capturing direction of the radiographic image that has been captured is set as a viewpoint direction, it is determined, based on the structure information, that a region where a flaw present in the inspection target object does not appear in the radiographic image is present in the inspection target object.

3. The information processing apparatus according to claim 1 or 2, wherein
the at least one processor is configured to
determine to re-capture the radiographic image in a case where a flaw is detected from the radiographic image that has been captured and it is determined, based on the structure information, that the inspection target object has a thickness equal to or greater than a certain thickness along a straight line connecting the flaw and a radiation source.

4. The information processing apparatus according to claim 1 or 2, wherein
the at least one processor is configured to
in a case where it is determined to re-capture the radiographic image, derive the image capturing condition for re-capturing, based on the image capturing condition of the radiographic image that has been captured.

5. The information processing apparatus according to claim 4, wherein
the at least one processor is configured to
in a case where it is determined to re-capture the radiographic image, derive the image capturing condition for re-capturing, based on the structure information and the image capturing condition of the radiographic image that has been captured.

6. An information processing method in which a processor included in an information processing apparatus executes processing comprising
determining, based on an image capturing condition including an image capturing direction of a radiographic image captured by irradiating an inspection target object with radiation and structure information representing a three-dimensional structure of the inspection target object, whether to re-capture the radiographic image.

7. An information processing program for causing a processor included in an information processing apparatus to execute processing comprising
determining, based on an image capturing condition including an image capturing direction of a radiographic image captured by irradiating an inspection target object with radiation and structure information representing a three-dimensional structure of the inspection target object, whether to re-capture the radiographic image.
